# EUROPEAN PATENT SPECIFICATION

(11) **EP 3 986 824 B1**
(45) Date of publication and mention of the grant of the patent: **12.11.2025**
(21) Application number: 20827713.7
(22) Date of filing: 21.06.2020
(51) Int. Cl.: B66C 1/12, D04H 3/045, D04G 1/00, B29D 28/00

(54) **A NET**
NETZ
FILET

(30) Priority: 20.06.2019 US 201962863909 P
(43) Date of publication of application: 27.04.2022
(73) Proprietor: Tama Group, 1923600 Kibbutz Mishmar Haemek (IL)
(72) Inventor: BLICH, Uri, 1923600 Kibbutz Mishmar Haemek (IL); EITAN, Rotem, 1923600 Kibbutz Mishmar Haemek (IL)
(74) Representative: Boult Wade Tennant LLP
(86) International application number: PCT/IL2020/050689
(87) International publication number: WO 2020/255146

(56) References cited:
- KR-A- 20060 028 669
- KR-A- 20060 028 669
- US-A- 3 011 820
- US-A- 3 011 820

## Description

### CROSS-REFERENCE TO RELATED APPLICATIONS

### FIELD OF THE INVENTION

The present invention, in some embodiments thereof, relates to a net and, more particularly, but not exclusively, to an adjustable net.

### BACKGROUND

Commonly used nets have a flat two-dimensional shape which can be folded and glued together to form a three-dimensional shape. Nets are often used for packaging items, point of sale display units, tissue boxes, wrapping, coating, barriers and so on.

Commonly used nets can provide protection to an element at least partially surrounded by the net, while supporting the element. For example, nets are used to wrap solid products of all sorts. Nets are used for transporting various products in a safe and a stable manner. Some commonly used nets are used in packing, and medical treatments which require air to pass through the apertures of the net.

An example for prior art net is given in U.S. Patent No. 3,011,820, which discloses a webbing cargo net comprising a peripheral member which carries a plurality of individual net mesh members. Each net mesh member is joined with the mesh members it intersects at the points of intersection to form the net. In order to provide a means by which the net and the load carried thereby may be suspended, a plurality of suspension rings are added at predetermined points around the net periphery.

Korean Patent Application Publication No. 2006-0028669 discloses a net or web blanks for cargo net. The net or web comprises a through groove for inserting the insertion of another webbing is formed at the intersection where the webbing crosses each other.

### SUMMARY

The following embodiments and aspects thereof are described and illustrated in conjunction with systems, tools and methods which are meant to be exemplary and illustrative, not limiting in scope.

In accordance with an aspect some embodiments, there is provided a net including a plurality of transverse bands, intersecting a plurality of longitudinal bands, wherein each longitudinal band of the plurality of longitudinal bands includes two intermittently adhered films forming channels at discontinuities of adhesion between the films, and wherein at an intersection of a longitudinal band and a transverse band a transverse band is threaded through a channel in said longitudinal band.

According to some embodiments, at least one channel of the channels includes a semi-adhered zone, a non-adhered zone, a friction zone or a combination thereof between the channel and the transverse bands. In some embodiments, at least one channel of the channels is configured to impede movement of the transverse band through the channel. In some embodiments, at least two of a plurality of transverse bands are threaded through channels of at least two of a plurality of the longitudinal bands and forming four intersections between the longitudinal bands and the transverse bands.

In some embodiments, the strength of the adhesion between the transverse band and the films in the intersection is at least 30% weaker than the adhesion between the films. In some embodiments, the channel includes inner surfaces facing each other and wherein the transverse band occupies 20 to 90% of a surface area of the inner surfaces. In some embodiments, the ratio between a surface area of adhered portions of the films to a surface area of the films at the channel is at least 3:1.

In some embodiments, a position and/or orientation of the transverse band in relation to the longitudinal band at the channel is adjustable. In some embodiments, a location of the point of intersection between the longitudinal band and the transverse band is adjustable along the length of at least one of the longitudinal bands and/or the transverse bands. In some embodiments, adjustability of the net is independent of the elasticity of the transverse bands and the longitudinal bands.

In accordance with an aspect of some embodiments of the invention there is provided a net, including a plurality of transverse bands, intersecting a plurality of longitudinal bands, wherein each longitudinal band of the plurality of longitudinal bands includes two intermittently adhered films forming channels at discontinuities of adhesion between the films, and wherein at an intersection of a longitudinal band and a transverse band a transverse band is threaded through a channel in said longitudinal band, wherein the at least one channel of the channels is configured to impede movement of the at least one transverse band threaded therethrough, and wherein the adhesion between each film of the films within the channel and the transverse band is at least 30% weaker than the adhesion between the adhered films.

According to some embodiments, the adhesion within at least one channel of the channels includes: a semi-adhered zone, non-adhered, a friction zone or a combination thereof between the films. In some embodiments, at least two of a plurality of transverse bands are threaded through channels of at least two of a plurality of the longitudinal bands and forming four intersections between the longitudinal bands and the transverse bands. In some embodiments, the channel includes inner surfaces facing each other and wherein the transverse band occupies 20 to 90% of a surface area of the inner surfaces. In some embodiments, the ratio between a surface area of adhered portions of the films to a surface area of the films at the channel is at least 3:1.

In some embodiments, a position and/or orientation of the transverse band in relation to the longitudinal band at the channel is adjustable. In some embodiments, a location of the point of intersection between the longitudinal band and the transverse band is adjustable along the length of at least one of the longitudinal bands and/or the transverse bands. In some embodiments, adjustability of the net is independent of the elasticity of the transverse bands and the longitudinal bands. In some embodiments, the transverse band further crosses an edge longitudinal band in a serpentine or zigzag manner. In some embodiments, the transverse band crosses the edge longitudinal band of the net and forms a semi-loop at one net's longitudinal edge, another net's longitudinal edge, or both. In some embodiments, the semi-loop extends beyond the one net's longitudinal edge, another net's longitudinal edge, or both. In some embodiments, the length (L) of the semi-loop corresponds to a predetermined distance (D) between the intersection of the semi-loop and the edge longitudinal band, at one net's longitudinal edge, another net's longitudinal edge, or both. In some embodiments, two adjacent segments of the transverse band threaded through at least one edge longitudinal band and define between them a semi-loop locking portion of the longitudinal band's edge. In some embodiments, the ratio between an area (a) of said locking portion exclusive of the channels and an area (b) inclusive of the channels is expressed by (0.1b>a).

According to some embodiments, provided herein is a net, comprising: a plurality of longitudinal bands; intersecting, at least one transverse band, wherein each longitudinal band of said plurality of longitudinal bands comprises two intermittently adhered films forming channels at discontinuities of adhesion between the films; and wherein at an intersection of a longitudinal band and the transverse band, the transverse band is threaded through at least one channel in the longitudinal band, wherein the transverse band crosses at least a portion of said plurality of longitudinal bands in a serpentine or zigzag manner. the transverse band crosses the edge longitudinal band of the net and forms a semi-loop at one net's longitudinal edge, another net's longitudinal edge, or both. In some embodiments, the semi-loops extend beyond one net's longitudinal edge, another net's longitudinal edge, or both. In some embodiments, the length (L) of the semi-loop corresponds to a predetermined distance (D) between the intersection of the semi-loop and at least one longitudinal band at one net's longitudinal edge, another net's longitudinal edge, or both. In some embodiments, two adjacent segments of the transverse band threaded through the edge longitudinal band, define between them the semi-loop locking portion of said longitudinal band.

In addition to the exemplary aspects and embodiments described above, further aspects and embodiments will become apparent by reference to the figures and by study of the following detailed description.

### BRIEF DESCRIPTION OF THE FIGURES

Exemplary embodiments are illustrated in referenced figures. Dimensions of components and features shown in the figures are generally chosen for convenience and clarity of presentation and are not necessarily shown to scale. The figures are listed below.
Figure 1 is a perspective view simplified illustration of an embodiment of a net in accordance with some embodiments of the present invention; and
Figures 2A and 2B are cross section view simplified illustrations of embodiments of intersections within a net in accordance with some embodiments of the present invention.
Figures 3A to 3E are cross sections of illustrations of embodiments of intersections within a net in accordance with some embodiments of the present invention.
Figures 4A and 4B, provide simplified illustrations of the net's tensioning system in accordance with some embodiments of the current invention.

### DETAILED DESCRIPTION

According to some embodiments of the present invention there is provided a net which comprises adjustable intersections 114. In some embodiments, the net comprises a plurality of transverse bands and a plurality of longitudinal bands. In some embodiments, each longitudinal band comprises two intermittently adhered films. In some embodiments, the adhered segments of the intermittently adhered films are non-reversibly adhered. In some embodiments, the non-adhered portions of the films form channels between the films. In some embodiments, the transverse band is threaded through the channels. In some embodiments, the non-adhered portions of the films impede the movement of the transverse band threaded therethrough. In some embodiments, the dimensions and physical properties of the channel and/or the transverse band determine the adjustability i.e., geometric deformation, of the transverse band within the channels.

According to an aspect of some embodiments of the present invention there is provided a net comprising longitudinal bands and transverse bands wherein the longitudinal bands comprise channels wherein the transverse bands are threaded through the channels. In some embodiments, the channels are at least partially adhered to the transverse bands that are threaded therethrough. In some embodiments, the adhesion (weaker adhesion of intersecting bands) between the transverse band and the films at the channel also referred to as junction, intersection or crossing is at least 30% weaker than the adhesion between the films at the adhered portion. In some embodiments, the adhesion between the transverse band and the films at the channel also referred to as junction, intersection or crossing reversal-adhesion. In some embodiments, the adhesion of the longitudinal bands to the transverse bands is formed at least in part by one or more of bonding (e.g., heat bonding, adhesive bonding, gluing or similar), welding, chemical adhesion or any combination thereof. In some embodiments, the adhesion (strong adhesion of intersecting bands) of a longitudinal band's edge to a transverse band is formed by heat bonding, welding, chemical adhesion or any combination thereof, this adhesion at the edge of a longitudinal band is at least twice, 3 times, 4 times, 5 times, 6 times, 8 times or 10 times, stronger than the adhesion at the junction. In one embodiment, longitudinal band's edge is 0.01 to 5 cm long at an end of longitudinal band. In some embodiments, strong adhesion of intersecting bands is performed only in a longitudinal band situated or located at a longitudinal edge of the net.

According to an aspect of some embodiments of the present invention there is provided a net comprising transverse and longitudinal bands wherein the adjustability of the net is independent of the elasticity of the transverse and longitudinal bands. In some embodiments, the net comprises adjustable shape of two-dimensional and three-dimensional geometries. In some embodiments, the transverse band is threaded through the channel of the longitudinal band to form a reticulate structure. In some embodiments, the adjustability of the longitudinal band and the transverse band in relation to each other at the intersections 114 comprises shiftable locations of the intersection along the length of the transverse band, angles between the transverse band and the longitudinal band at the intersection, and lengths of the transverse band between intersections 114.

In one embodiment, a longitudinal band comprises an edge longitudinal band. In one embodiment, an edge longitudinal band is positioned at a longitudinal edge or end of the net. In one embodiment, a longitudinal edge or end of the net comprises at least one longitudinal band or at least one edge longitudinal band. In one embodiment, each of the net's longitudinal edge or end comprises 1 to 10 longitudinal bands/edge longitudinal bands. In one embodiment, each of the net's longitudinal edge comprises 1 to 6 longitudinal bands/edge longitudinal bands. In one embodiment, each of the net's longitudinal edge consists 1 longitudinal band/edge longitudinal band. In one embodiment, each of the net's longitudinal edge comprises 2 to 4 longitudinal bands/edge longitudinal bands.

In one embodiment, a transverse band further crosses an edge longitudinal band in a serpentine or zigzag manner. In one embodiment, a transverse band crosses an edge longitudinal band of the net and forms a semi-loop at one longitudinal edge of the net, another edge longitudinal of the net, or both. In one embodiment, the semi-loop extends beyond one edge of the net, another edge of the net, or both.

In one embodiment, a length (L) of the semi-loop corresponds to a predetermined distance (D) between an intersection of the semi-loop and at least one longitudinal band or an edge longitudinal band at one edge of the net, another edge of the net, or both.

In one embodiment, at least two adjacent segments of a transverse band threaded through at least one edge longitudinal band define between them a semi-loop locking portion of a longitudinal band or an edge longitudinal band (at the net's longitudinal edge). In one embodiment, the ratio between an area (a) of the locking portion exclusive of the channels and an area (b) inclusive of said channels is expressed by (0.1b>a).

In one embodiment, provided herein is a net, comprising: a plurality of transverse bands; and a plurality of longitudinal bands; wherein each longitudinal band of said longitudinal bands comprises two films, each longitudinal band comprises at least two adhered portions and a non-adhered portion therebetween forming a channel. In some embodiments, the channel is an opening formed between the films and/or at least partial discontinuity in the adhesion of the films between two adhered portions.

In some embodiments, each adhered portion of said adhered portions ends with a channel; wherein the channel (and/or non-adhered portion) comprises a semi-adhered zone, a non-adhered zone or both wherein each transverse band of at least 50% of the transverse bands is threaded through the channel forming an intersection between the longitudinal band and the transverse band. In one embodiment, one transverse band is threaded in at least two channels, wherein each channel of at least two channels is on a different longitudinal band. In one embodiment, at least one transverse band is threaded in at least two channels, wherein each channel of at least two channels is on a different longitudinal band.

In one embodiment, a semi-adhered zone, a non-adhered zone or both, is present only in a channel. In one embodiment, a semi-adhered zone, a non-adhered zone or both, is present only in a longitudinal band. In one embodiment, a semi-adhered zone is a zone wherein the films are loosely adhered to one another. In one embodiment, a semi-adhered zone is a zone wherein each one of the films is loosely adhered to a transverse band. In one embodiment, a non-adhered zone is a zone wherein the films are not adhered to one another. In one embodiment, a non-adhered zone is a zone wherein each one of the films is not adhered to a transverse band.

In one embodiment, the two films are glued to each other. In one embodiment, each film of the two films comprises two sides, wherein one side is sticky or comprises a glue and the other side is non-sticky or devoid of glue. In one embodiment, the sticky side or the glue comprising side of each film of the two films are in contact within an adhered portion of the adhered portions. In one embodiment, the sticky side or the glue comprising side of each film of the two films are in contact the transverse band within the channel. In one embodiment, the transverse band is devoid of glue or a sticky side. In one embodiment, the transverse band comprises a single film devoid of a glue or a sticky side. In one embodiment, the longitudinal band comprises two film wherein each film has two sides (or surfaces) wherein one side or surface is devoid of a glue or a sticky side and the second side or surface comprises a glue or a sticky side.

In one embodiment, a tape comprises a pressure-sensitive adhesive. In one embodiment, a tape comprises fiberglass filaments. In one embodiment, a tape is a filament tape. In one embodiment, a tape comprises a pressure-sensitive adhesive coated onto a polypropylene or polyester film and fiberglass filaments embedded within. In one embodiment, a tape is comprised of liquid rubber. In one embodiment, a tape comprises ethylene propylene rubber (EPR). In one embodiment, a tape comprises polyisobutylene.

In one embodiment, a tape is a friction tape. In one embodiment, a tape comprises an adhesive is impregnated onto it. In one embodiment, the adhesive is a rubber-based adhesive. In one embodiment, a tape is a self-amalgamating tape. In one embodiment, a tape is a non-tacky tape.

In one embodiment, a tape comprises a pressure-sensitive adhesive coated onto one side of the tape. In one embodiment, a pressure-sensitive adhesive is coated onto the tape wherein the tape is composed of a polypropylene or a polyester film. In one embodiment, a tape has strength in both the long (machine) direction and the cross direction. In one embodiment, a tape comprises an adhesive. In one embodiment, a tape comprises an acrylic adhesive. In one embodiment, the term "adhesive" and "glue" are used interchangeably.

In one embodiment, a tape comprises strip of thin plastic material. In one embodiment, a tape comprises latex. In one embodiment, a tape adheres only to itself or to another identical tape. In one embodiment, a tape is a cloth- or scrim-backed pressure-sensitive tape. In one embodiment, a tape is coated with polyethylene.

In one embodiment, "loosely adhered" is an adherence between two films having a strength, a bonding strength, adhesive power, cohesive power or any combination thereof which is at least 20%, 30%, 40%, 50%, 60%, 70%, 80%, or 90% less than the adherence the strength, the bonding strength, the adhesive power, the cohesive power or any combination thereof between two films within the adhered portion of a longitudinal band.

In one embodiment, provided herein is a net, comprising: a plurality of transverse bands; and a plurality of longitudinal bands. In one embodiment, each longitudinal band of the longitudinal bands comprises two films. In one embodiment, each longitudinal band comprises at least two adhered portions. In one embodiment, an adhered portion is a portion, or an area characterized by adhesion between the two films. In one embodiment, each adhered portion borders one channel or two of channels.

In one embodiment, each channel of the channels comprises at least partial adhesion between the two films or between each film and the transverse band. In one embodiment, each channel of the channels comprises no adhesion between the two films or between each film and the transverse band. In one embodiment, each channel is configured to accommodate at least a portion of a transverse band between the films.

In one embodiment, each transverse band of at least 40%, 50%, 60%, 70%, 80%, 90% or all of the transverse bands is threaded through each channel of the channels. In one embodiment, a transverse band threaded through a channel forms an intersection between the longitudinal band and said transverse band. In one embodiment, the strength of the adherence, the bonding strength, the adhesive power, the cohesive power or any combination thereof between the transverse band and the channel at the intersection is at least 30% weaker than the strength of the adherence, the bonding strength, the adhesive power, the cohesive power or any combination thereof between the two films at the adhered portion/s.

In one embodiment, the transverse band occupies 90%, 80%, 75%, 70%, 60% or 50% or less of the channel area. In one embodiment, "the transverse band occupies" is synonymous with a transverse section of the transverse band.

In one embodiment, the ratio between the surface area of the adhered portions to the surface area of the channel is at least 2:1. In one embodiment, the ratio between the surface area of the adhered portions to the surface are of the channel is at least 2.5:1. In one embodiment, the ratio between the surface area of the adhered portions to the surface area of the channel is at least 3:1. In one embodiment, the ratio between the surface area of the adhered portions to the surface area of the channel is at least 4:1. In one embodiment, the ratio between the surface area of the adhered portions to the surface area of the channel is at least 5:1.

In one embodiment, the ratio between the surface area of the adhered portions to the surface area of the channel is between 1.5:1 to 100:1. In one embodiment, the ratio between the surface area of the adhered portions to the surface area of the channel is between 1.5:1 to 75:1. In one embodiment, the ratio between the surface area of the adhered portions to the surface area of the channel is between 2:1 to 50:1. In one embodiment, the ratio between the surface area of the adhered portions to the surface area of the channel is between 4:1 to 50:1.

In one embodiment, the transverse band is moveable within the channel. In one embodiment, the transverse band is translocatable within the channel. In one embodiment, the transverse band is moveable along the length of the channel, along the width of the channel or both. In one embodiment, the transverse band is translocatable within the length of the channel, the width of the channel or both.

In one embodiment, the orientation of the transverse band in relation to the longitudinal is adjustable. In one embodiment, the orientation of the transverse band in relation to the longitudinal within a channel is adjustable. In one embodiment, the angle between a transverse band and a longitudinal band with a channel is adjustable. In one embodiment, the intersection and or the channel is/are moveable and/or relocatable.

In one embodiment, the net is an adjustable net, which is a deformable structure composed of elements which can be non-deformable, rigid, semi-rigid, and/or elastic, and the like, such that the adjustability of the structure of the net 100 is formed at least partially by the adjustable orientation and/or position of the elements in relation to one another. In one embodiment, a net as described herein is stretchable.

In one embodiment, a net as described herein is stretchable by at least 1.5 of its initial length and/or width. In some embodiments, the net is stretchable by at least 1.2 of its initial length. In some embodiments, the net is stretchable by at least 1.7 of its initial length. In some embodiments, the net is stretchable by at least 1.2 of its initial width. In some embodiments, the net is stretchable by at least 1.5 of its initial width. In some embodiments, the net is stretchable by at least 1.7 of its initial width.

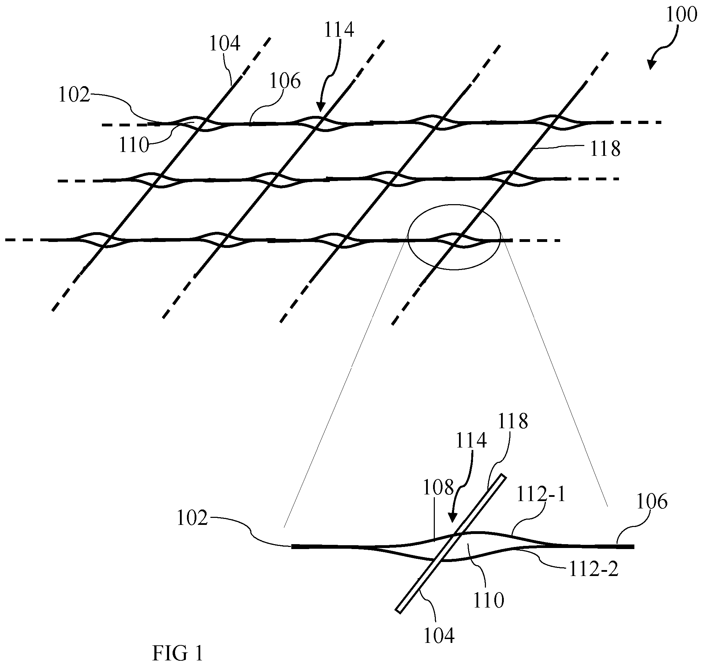

Reference is made to Fig. 1, which is a perspective view of an exemplary embodiment of a net in accordance with some embodiments of the present invention. In some embodiments, the net **100** comprises a plurality of longitudinal bands **102.** In some embodiments, the net **100** comprises a plurality of transverse bands **104.** In some embodiments, the longitudinal band **102** comprises at least one channel **110** formed between two or more films **112.** In some embodiments, the transverse band **104** is threaded between the films **112** and/or through the channel **110.**

In some embodiments, a longitudinal band **102** comprises at least one channel **110.** In some embodiments, each longitudinal band **102** comprises at least two channels **110.** In some embodiments, at least one transverse band **104** is threaded through each channel **110.** In some embodiments, one transverse band **104** is threaded through each channel **110.** In some embodiments, a plurality of transverse bands **104** are threaded through each channel **110.**

In some embodiments, the elements of the net **100,** as described in greater detail elsewhere herein, are the longitudinal band **102** and/or the transverse band **104.** In some embodiments, the intersection **114** of the transverse band **104** and the longitudinal band **102** is shiftable along the length of at least one of the transverse bands **104** and the longitudinal band **102.** In some embodiments, the net **100** is deformable, for example, by adjusting the position and/or orientation of the transverse band **104** within the channels **110.**

A potential advantage in adjustable intersections **114** is in that a geometry of the net **100** is adjustable independently of the elasticity of the transverse and longitudinal bands **104/102.**

A potential advantage of the adjustability of the longitudinal band **102** and the transverse band **104** in relation to each other at the intersections **114** is in that the adjustability of the structure of the net **100** is increased by establishing a range of positions and/or orientations of the transverse band **104** in relation to the longitudinal band **102.** In some embodiments, the adjustability of the net **100** is independent of the elasticity of the transverse bands **104** and said longitudinal bands **102.**

### Longitudinal Band

In some embodiments, the longitudinal band **102** is composed of two films **112-1** and **112-2,** collectively referred to as films **112.** In some embodiments, the films **112** comprise a cord, a wire, a belt, film, a thread, and the like. In some embodiments, the films **112** comprise tapes. In some embodiments, the longitudinal band **102** comprises two layered films **112.** In some embodiments, the films **112** are similar in shape and size. In some embodiments, and as described in greater detail elsewhere herein, the films **112** are at least partially adhered to each other.

In some embodiments, the films **112** comprise inner surfaces (e.g., inner surfaces **122-1** and **122-2,** collectively referred to as inner surfaces **122)** which are facing each other. In some embodiments, the inner surfaces **122** of the films **112** are adhered at at least two adhered portions **106** along the longitudinal band **102.** In some embodiments, a portion of the inner surfaces **122** are sticky at least at the adhered portions **106** of the longitudinal band **102.** In some embodiments, the inner surfaces of the films **112** comprise an adhesive. For example, in some embodiments, such as the exemplary embodiment depicted by Fig. 1, the longitudinal band **102** comprises two films **112** stuck to each other.

In some embodiments, the films **112** are touching, adhered, coupled, bound, glued, connected, joining, bordering, attached, bonded, or any combination thereof.

In some embodiments, the longitudinal band **102** is flexible, semi-rigid, rigid, elastic, deformable, ductile, stretchable, and the like. In some embodiments, the longitudinal band **102** is composed of materials such as steels, polymers, alloys, polyethylene, plastics, elastic polymers, metals, or any combination thereof.

In some embodiments, the width of the longitudinal band **102** is 1-150mm. In some embodiments, the width of the longitudinal band **102** is 10-50mm. In some embodiments, the width of the longitudinal band is 15-25mm. In some embodiments the width of the longitudinal band **102** constant. In some embodiments, the width of the longitudinal band **102** varies.

In one embodiment, a tape's width is from 2 mm to 150 mm. In one embodiment, a tape's width is from 5 mm to 75 mm. In one embodiment, a tape's width is from 10 mm to 75 mm. In one embodiment, a tape's width is from 10 mm to 50 mm. In one embodiment, a tape's width is from 15 mm to 45 mm. In one embodiment, both tapes of the two tapes have the same width. In one embodiment, both tapes of the two tapes have the same length. In one embodiment, both tapes of the two tapes have the same thickness. In one embodiment, both tapes of the two tapes and the longitudinal band have the same width. In one embodiment, both tapes of the two tapes and the longitudinal band **102** have the same length.

In one embodiment, the tape's thickness is 0.02 to 1 mm. In one embodiment, the tape's thickness is 0.05 to 1 mm. In one embodiment, the tape's thickness is 0.05 to 0.5 mm. In one embodiment, the tape's thickness is 0.06 to 0.8 mm. In one embodiment, the tape's thickness is 0.08 to 0.5 mm.

In one embodiment, the longitudinal band's **102** thickness is 0.03 to 2 mm. In one embodiment, the longitudinal band's thickness is 0.05 to 1.8 mm. In one embodiment, the longitudinal band's thickness is 0.1 to 1 mm. In one embodiment, the longitudinal band's **102** thickness is 0.12 to 1.8 mm. In one embodiment, the longitudinal band's **102** thickness is 0.16 to 1.2 mm. In some embodiments, the longitudinal band **102** comprises at least two adhered portions **106** in which the films **112** are adhered. In some embodiments, the adhered portions **106** confine a channel **110** between thereof.

### Adhered Portion

In some embodiments, the total surface area of the adhered portions **106** is at least 50%, 60%, 70%, 80%, or 90% of the total surface area of the longitudinal band **102,** or any value and range therebetween.

In some embodiments, the length of the adhered portion **106** along the length of the longitudinal band **102** is 0.5-150mm. In some embodiments, the length of the adhered portion **106** is 0.5-75mm. **In** some embodiments, the length of the adhered portion **106** is 1-25mm. In some embodiments, the length of the adhered portion **106** is 1-13mm. In some embodiments, the length of the adhered portion **106** is 1-7mm.

In some embodiments, each longitudinal band **102** comprises adhered portions **106** of equal lengths. In some embodiments, the length of the adhered portions **106** vary along each individual longitudinal band **102.**

In some embodiments, and as described in greater detail elsewhere herein, the film **112** comprises a tape. In some embodiments, and as described in greater detail elsewhere herein, the tape comprises one or more of a filament tape, a friction tape, a self-amalgamating tape, which comprise adhesion properties such as bonding strength and/or friction.

### Channel

In some embodiments, the longitudinal band **102** comprises a plurality of channels **110.** In some embodiments, the channel **110** is shaped to accommodate the transverse band **104** through the channel **110.** In some embodiments, the channels **110** are formed by discontinuities in the intermittent adhesion of the longitudinal band **102.** In some embodiments, at least 50% of the adhered portions **106** within a net **100** as described herein each confine at least two channels **110.** In some embodiments, at least 60% to 80% of the adhered portions **106** within a net **100** each confine at least two channels **110.**

In some embodiments, the channel **110** between two films **112** of the longitudinal band **102** comprises an opening, a partial opening, a partial adhesion, and/or no adhesion between the films **112.** In some embodiments, opening comprises a gap, slot, and/or discontinuity of the adhesion between two films **112.** In some embodiments, and as described in greater detail elsewhere herein, the channel **110** comprises a semi-adhered zone, a non-adhered zone or both. In some embodiments, the channel **110** houses the transverse band **104.**

In one embodiment, a semi-adhered zone comprises one or more of a zone wherein the films **112** are loosely adhered to one another and a zone wherein at least one film **112** is loosely adhered to the transverse band **104.** For example, in some embodiments, the loosely adhered films **112** comprise an adhesive wherein the strength of the adhesive is weaker than the strength of the adhesion between the films **112** at the adhered portions **106.** For example, in some embodiments, the loosely adhered films **112** comprise surfaces which have frictional interaction with each other and/or with the transverse band **104.**

For example, in some embodiments, the loosely adhered film **112** and transverse band **104** comprise an adhesive wherein the strength of the adhesive is weaker than the strength of the adhesion between the films **112** at the adhered portions **106.**

In some embodiments, the semi-adhered zone comprises adhesion which is at least 30%, 40%, 50%, 60%, 70%, 80%, or 99% weaker than the adhesion between the films **112** of the longitudinal band **102,** or any value or range therebetween.

In some embodiments, the non-adhered zone comprises a zone wherein one or both of the films **112** are not adhered to the transverse band **104,** and/or the films **112** are not adhered to one another.

In some embodiments, the channel **110** houses the transverse band **104.** In some embodiments, the channel **110** houses the 1-3 transverse bands **104.** In some embodiments, the channel **110** is adapted to provide an opening which houses the transverse band **104.** In some embodiments, the channel **110** is adapted to provide an opening which houses the transverse band **104** and an area of 20 to 200% of the width of the transverse band **104.** In some embodiments, the channel **110** is adapted to provide an opening which houses the transverse band **104** and an area of 30% to 150% of the width of the transverse band **104.** In some embodiments, the channel **110** is adapted to provide an opening which houses the transverse band **104** and an area of 40% to 100% of the width of the transverse band **104.**

In some embodiments, the ratio between the surface area of the outer surface of the films **112** at the adhered portion **106** and the surface area of the outer surface of the films **112** at the channel **110** is 8:1, 6:1, 4:1, or 2:1, or any value and range therebetween. For example, in the exemplary embodiment depicted by Fig. 1, the ratio between the surface area of the outer surface of the films **112** at the adhered portion **106** and the surface area of the outer surface of the films **112** at the channel **110** is 3:1. In some embodiments, the width of the films **112** at the adhered portion **106** is equal to the width of the films **112** at the channel **110.**

In some embodiments, the width of the channel **110** is defined as a distance across the channel **110**which is parallel to the length of the longitudinal band **102.** In some embodiments, the channel **110** is at least 2mm wider than the transverse band **104.** In some embodiments, the channel **110** is at least 5mm wider than the transverse band **104.** In some embodiments, the width of the channel **110** is 1-20mm larger than the width of the transverse band **104.**

In some embodiments, the width of the channel **110** is 5-10mm larger than the width of the transverse band **104.** In some embodiments, the width of the channel **110** is 1-5mm larger than the width of the transverse band **104.** In some embodiments, the width of the channel **110** is constant. In some embodiments, the width of the channel **110** varies. In some embodiments, the difference between the width of the channel **110** and the width of the transverse band **104** defines the range of distance in which the transverse band **104** is can adjust within the channel **110.**

A potential advantage of the width of the channel **110** being larger than the width of the transverse band **104** is in that the position and/or orientation of the transverse band **104** is adjustable within the channel **110,** which increases the adjustability of the structure of the net **100** independently form the elasticity of the longitudinal band **102** and/or transverse band **104.**

A potential advantage of the longitudinal band **102** comprising a channel **110** is in that the surfaces of the transverse band can remain parallel to the surfaces of the longitudinal band within the channel **110,** which maintains the net **100** flat. A flat net **100** can be rolled onto a roller during unpacking and/or for efficient storage.

A potential advantage of the films **112** having a stronger adhesion than the adhesion within the channel **110** is in that the dimensions of the adhered portions **106** and/or channels **110** of the longitudinal band **102** are not altered by forces applied to the net **100.** In some embodiments, the adherence of the films **112** prevents external forces applied onto the longitudinal band **102** from deforming the channel **110.** In some embodiments, the adherence of the films **112** prevents external forces applied onto the transverse band **104** from deforming the channel **110.**

### Transverse Band

In some embodiments, the transverse band **104** comprises a cord, a wire, a belt, a film, a thread, and the like. In some embodiments, the transverse band **104** comprises at least a portion having dimensions sufficient to fit within the channel **110** of the longitudinal band **102.**

In some embodiments, the transverse band **104** is flexible, semi-rigid, rigid, elastic, deformable, stretchable, ductile, and the like. For example, in some embodiments, the transverse band **104** is composed of materials such as steels, polymers, alloys, metals, polyethylene, plastics, elastic polymers, or any combination thereof.

In some embodiments, the thickness of the transverse band **104** is 0.03 to 2mm. In some embodiments, the thickness of the transverse band **104** is 0.05-1.8mm. In some embodiments, the thickness of the transverse band **104** is 0.1-1mm. In some embodiments, the thickness of the transverse band **104** is 0.12-1.8 mm. In some embodiments, the thickness of the transverse band **104** is 0.04-1.3 mm. In some embodiments, the thickness of the transverse band **104** is constant. In some embodiments, the thickness of the transverse band **104** varies.

In some embodiments, the thickness of the transverse band **104** is smaller than or equal to the height of the opening of channel **110.** In some embodiments, the thickness of the transverse band **104** is sufficient to fit within the opening of channel **110** such that the transverse band **104** abuts against both of the films **112** of the channel **110.**

In some embodiments, the width of the transverse band **104** is shorter than the width of the channel **110.** In some embodiments, the width of the transverse band **104** is 1-50mm. In some embodiments, the width of the transverse band **104** is 0.2-30mm. In some embodiments, the width of the transverse band **104** is 0.5-15mm. In some embodiments, the width of the transverse band **104** is 3-17mm. In some embodiments the width of the transverse band **104** constant. In some embodiments, the width of the transverse band **104** varies.

In some embodiments, the transverse band **104** folds within the channel **110,** such that the width of the transverse band **104** within the channel **110** is smaller than a flattened transverse band **104.**

In some embodiments, the transverse band **104**occupies 90% or less of the channel **110** area. In some embodiments, the transverse band **104** occupies 70% or less of the channel **110** area. In some embodiments, the transverse band **104** occupies 60-99% of the channel **110** area. In some embodiments, the transverse band **104** occupies 20-65% of the channel **110** area.

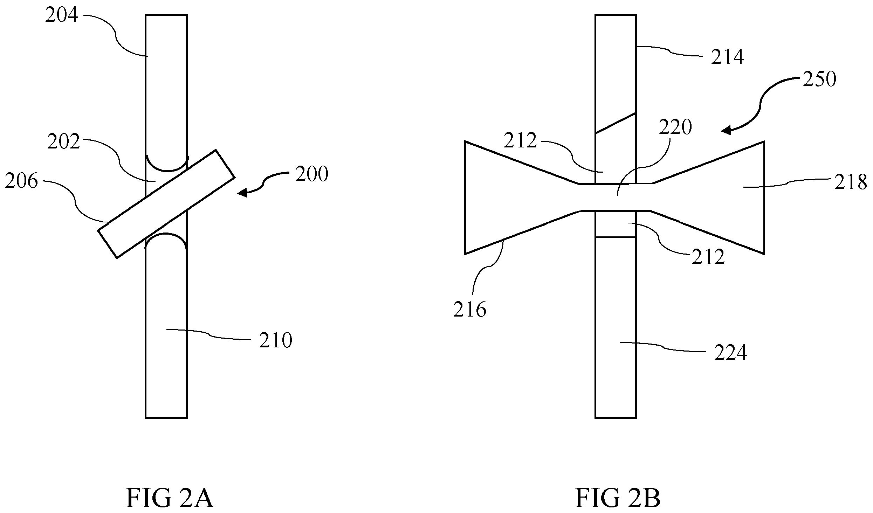

In some embodiments, the transverse band comprises a portion within the channel **110** and an outer portion **118** which remains outside of the channel **110.** In some embodiments, the dimensions of the outer portion **118** are larger than then dimensions of the channel **110** (as described in greater detail elsewhere herein and depicted by Fig. 2B). For example, in some embodiments, the width of the outer portion **118** larger than the width of the channel **110.** In some embodiments, the outer portion **118** is sized and positioned such that the transverse band **104** has limited mobility along the longitudinal axis of the transverse band **104.** In some embodiments, the motion of the transverse band **104** within the channel **110** is limited by the portion **118.**

In some embodiments, the transverse band **104** comprises the outer portion **118** at one side or both sides of the channel **110,** such that movement of the transverse band **104** is limited within the channel **110.** In some embodiments, the transverse band **104** comprises at least one outer portion **118** at least one side of the channel **110,** such that movement intersection **114** along the length of the transverse band **104** is limited in at least one direction.

In some embodiments, the distance between two consecutive outer portions **118** is 20-90mm. In some embodiments, the distance between two consecutive outer portions **118** is 30-100mm. In some embodiments, the distance between two consecutive outer portions **118** is 40-60mm.

Reference is made to Figs. 2A and 2B, which are cross section views of exemplary embodiments of intersections within a net in accordance with some embodiments of the present invention. In the exemplary embodiments depicted by Figs. 2A and 2B, the longitudinal bands **204/214** comprise one film **210/224** on either side of the transverse bands **206/216** at each intersection **200/250.**

In some embodiments, such as depicted by Fig. 2A, the channel **202** is shaped to accommodate the transverse band **206.** In some embodiments, the channel **202** is shaped to accommodate the transverse band **206** at a range of orientations in relation to the longitudinal band **204.**

In some embodiments, such as depicted by Fig. 2B, the width of the transverse band **216** varies. In some embodiments, the width of the portion **220** of the transverse band within the channel **212** is smaller than the width of the channel **212.** In some embodiments, the width of the portion **218** of the transverse band **216** outside of the channel **212** is larger than the width of the channel **212.** In some embodiments, the distance between the portions **218** of the transverse band **216** which are wider than the channel **212** determined the range of mobility of intersection **250** along the length of the transverse band **216.**

In some embodiments, the channel **212** is asymmetrical. In some embodiments, the asymmetrical channel **212** prevents the transverse band **216** from sliding through the channel in only one direction along the length of the transverse band **216.**

### Intersection

In some embodiments, the net **100** comprises a plurality of intersections **114.** In some embodiments, the intersection **114** comprises a first film, e.g. film **112-1,** a transverse band **104** and a second film, e.g., **112-2.** In some embodiments, the first and second films **112-1** and **112-2** are components of the longitudinal band **102.** In some embodiments, at least a portion of the surface of the first film **112** is adhered to at least a portion of the surface of the second film. In some embodiments, one or both of the films **112** comprise sticky sides. In one embodiment, an intersection **114** comprises a transverse band **104** sandwiched between two films **112.**

In some embodiments, an intersection **114** comprises a first portion comprising a first film **112,** a transverse band **104** and a second film and a second portion comprising a first film **112** and a second film **112** without a transverse band **104.** In some embodiments, an intersection **114** comprises 3 regions wherein the first and the third regions comprise the first portion and the second region comprises the second portion. In one embodiment, the second region is sandwiched between the first and third regions.

In some embodiments, the adhesion between the transverse band **104** and each of films **112** of the longitudinal band **102** is such that applying a force above a threshold value to the one of the bands of an intersection **114** changes the orientation of one band in relation to another.

In some embodiments, the adhesion between the transverse band **104** and the one or more of the films **112** of the longitudinal band **102** comprises lateral adhesion.

In some embodiments, the transverse band **104** is slidable within the channel **110.** In some embodiments, the location of the intersection **114** along the length of the transverse band **104** is adjustable. In some embodiments, the orientation of the transverse band **104** is adjustable in relation to the channel **110** and/or the longitudinal band **102.**

### Reticulate Structure

In some embodiments, the net **100** comprises a reticulate structure. In some embodiments, the reticulate structure is symmetrical. In some embodiments, the reticulate structure is a grid or grid-like.

In some embodiments, at least one transverse band **104** is positioned within the channels **110** of the longitudinal bands **102** such that applying a pulling force onto the transverse band **104** reduces one or more of the width, length, or thickness of at least a portion of the net **100.**In some embodiments, and as explained in greater detail elsewhere herein, the structure of the net **100** is adjusted to form fittingly wrap a three-dimensional object.

In some embodiments, the length of a diagonal of the net **100** is elongated by changing the position of the point of intersection **114** along the length of one or more transverse bands **104.** In some embodiments, of the elongation ability of the net **100** is increased by removing a transverse band **104** from one or more channels **110.**

### Net tensioning control system

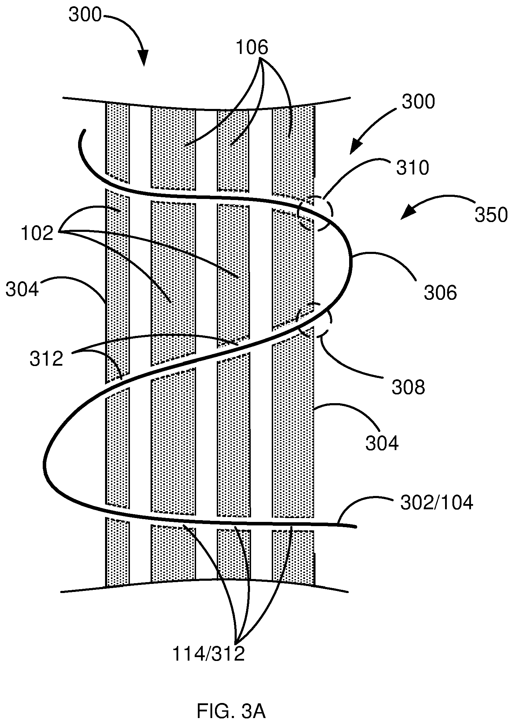

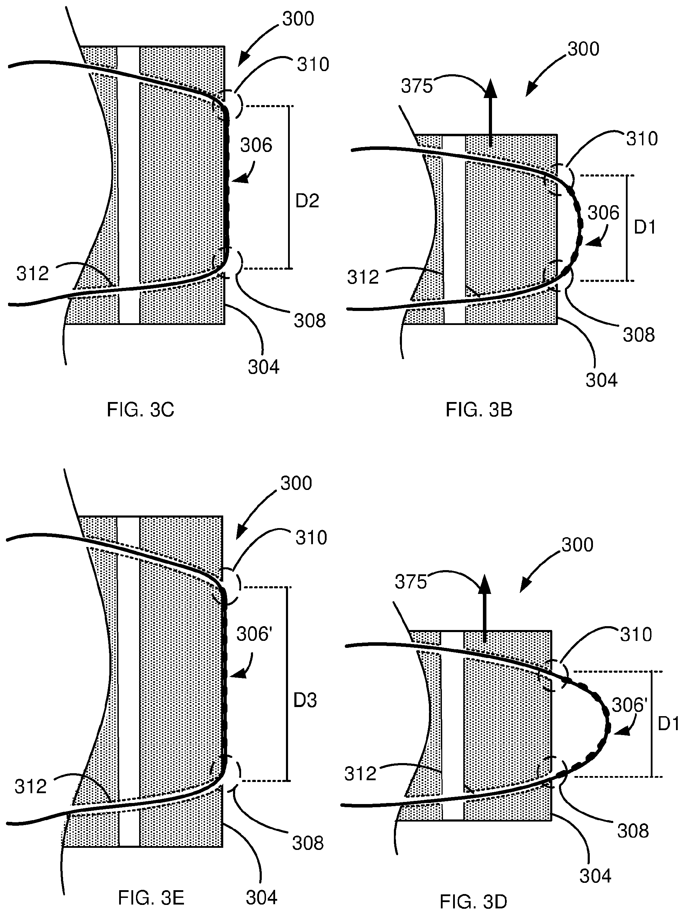

Referring now to Figs. 3A, 3B, 3C and 3D, which are plan view simplified illustrations of a net tensioning control system in accordance with some embodiments of the current invention. In some embodiments and as explained elsewhere herein, a net 300 comprises adhered portions 106 along longitudinal bands 102 one or more transverse bands 104 crossing one or more longitudinal bands 102 from one side of net 300 to another via one or more channels 312, similar to channels 110 described elsewhere herein, in a serpentine or zigzag manner. In some embodiments, net 300 comprises one or more transverse bands 104 which cross an edge-longitudinal-band 304 of net 300 in a serpentine or zigzag manner.

In some cases, net 300 may enclose items having an asymmetrical geometry, bulging and/or protruding portions. Therefore, in some embodiments, net 300 is stretchable at least along a longitudinal axis thereof. However, overstretching may, in some cases, bring about loss of elasticity of the net 300 fibers/bands or even tearing of the net fibers/bands. Hence, in some embodiments, net 300 comprises a net tensioning control system 350 that limits the extent of stretching of net 300 and prevents overstretching and possibly tearing of the net.

In some embodiments, net tensioning control system 350 comprises one or more transverse bands 302 that run through net 300 in a serpentine manner or zigzag manner. In some embodiments, net tensioning control system 350 comprises one or more transverse bands 302 that cross, circle and or surround an edge-longitudinal-band 304 of net 300 in a serpentine or zigzag manner. In some embodiments, band 302 runs through net 300 or cross, circle and or surround an edge-longitudinal-band following other patterns e.g., parallel to the edge or edges of net 300, in a crisscross pattern, a zig-zag pattern (Z-pattern or N-pattern) or any other pattern that is compliant with increasing tension on net 300 over a material being packed.

In some embodiments, and as shown in Fig. 3A, transverse band 302 extends beyond the edges 304 of net 300 or an edge-longitudinal-band 304 by exiting and reentering channels 312 at adjustable intersections 114 at one or more edges 304 of net 300 to form one or more semi-loops 306. For example, transverse band 302 may exit at an exit point 308 from a channel 312 and reenter the edge 304 of net 300 via entry point 310 at a second channel 312. In some embodiments, transverse band 302 forms one or more semi-loops 306 at predetermined locations, e.g., at locations disposed to tearing like at folds or bends of net 300. Alternatively, and optionally, transverse band 302 forms semi-loops 306 in a repetitive pattern throughout a dimension e.g., edge, of net 300. In one embodiment, edges 304 is or comprises an edge-longitudinal-band 304.

In some embodiments, transverse band 302 is threaded through net 300, for example, between the films 112 of a band and/or through channels 110 and/or a dedicated channel 312 shaped to have a geometry that corresponds to and supports accommodation of band 302. In some embodiments, transverse band 302 is at least partially adhered to net 300 at one or more locations in dedicated channel e.g., at a junction, an intersection or a crossing as explained in greater detail elsewhere herein. In some embodiments, adherence of transverse band 302 is the same at exit and entry points 308/310 as along adherence points in channels 110 and/or a dedicated channel 312. In some embodiments, adherence of transverse band 302 is greater at entry and exit points 308/310 than the adherence of transverse band 302 along adherence points in channels 110 and/or a dedicated channel 312.

The exemplary embodiments depicted in Figure pair numbers 3B/3C and 3D/3E, transverse band 302 forms a semi-loop 306 having a generally fixed length (L) and protrudes outside one or more edges 304 of net 300 between exit and entry points 308/310 located at a distance (D1) from each other. As illustrated in Figs. 3B/3C, once net 300 is stretched, for example, in a direction indicated by an arrow designated reference number 375, the distance between exit and entry points 308/310 increases from a distance (D1) to a distance (D2) i.e., (D2)>(D1) as a result of which semi-loop 306, having a generally fixed length (L), is drawn axially and straightens, parallel to the direction indicated by arrow 350 to conform to and be urged along its length against edge 304 of net 300.

In some embodiments, semi-loop 306 serves as a visual indicator of the amount of stretching of net 300 in that the amount of stretching of net 300 corresponds to the level of flatness or proximity of the length dimension of semi-loop 306 to edge 304 of net 100. To that effect, the length (L1) of semi-loop 306 depicted in Fig. 3B is designed to be generally equal to the post-stretching distance (D2) of net 300 between exit and entry points 308/310 (L1=D2). Hence, the length (L) of semi-loop 306 is equal to a maximal allowable distance (D2).
In some embodiments, the length (L) of semi-loop 306 is predetermined in accordance with a desired limit of stretchability of net 300. For example, and as shown in Figs. 3D and 3E, loop 306' has a length (L2) that allows net 300 to stretch to a limited distance (D3), i.e., (L2=D3) wherein distance (D3) is greater than distance (D2) of Fig. 3C (D3>D2). In this example, (L2/L1) is proportional to (D3/D2).

In some embodiments, during stretching of net 300 there is at least some movement/sliding of transverse band 302 within cannels 110 of adjustable intersections 114 bringing about some distribution of transverse band 302 throughout net 300. This minor distribution of transverse band 302 has negligible if any effect on lengthening of semi-loop 306 along edge 304 of net 300 during stretching.

In some embodiments, the maximal allowable stretchability of net 300 depends on, for example, the material of which longitudinal bands 102 are made, the degree of adhesion of transverse band 104/302 within channels 312 and the density of transverse band 302 crossings. In some embodiments, transverse band 302 is made of a non-compliant material. In some embodiments, transverse band 302 is made of a material less compliant than the material of which net 300 is made e.g., having a Young modulus (E_{band}) equal to or smaller than a Young modulus of the net ( Eₙₑₜ). In some embodiments, transverse band 302 is made of an elastic material the elastic limit of which is reached under tensile forces smaller than those required for tearing of the fibers of net 300. In some embodiments, the type of material of transverse band 302 depends on the degree of elasticity of net 300 or the desired degree of stretchability of net 300 regardless of the level of elasticity of transverse and longitudinal bands 104/102 themselves.

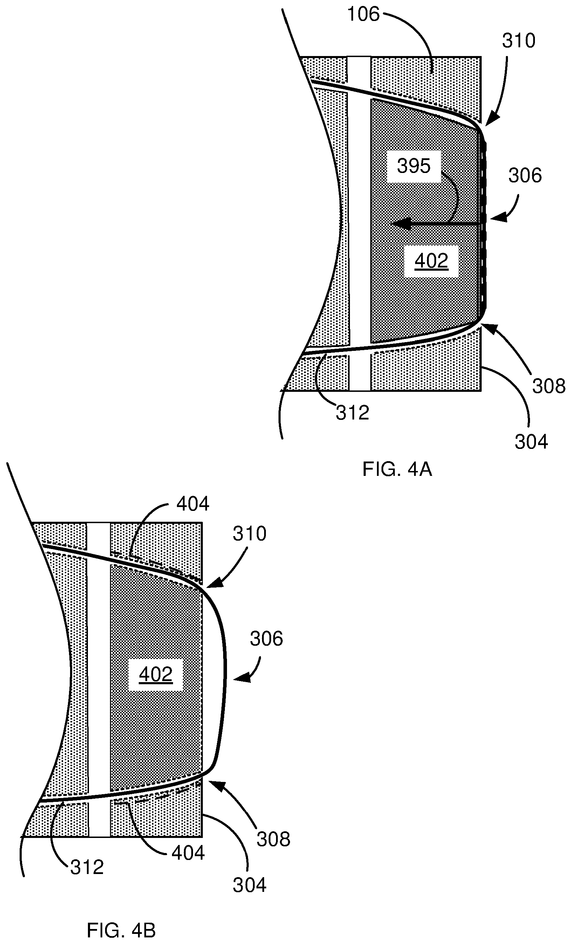

Reference is now made to Figs. 4A and 4B, which are plan view simplified illustrations of net 300 tensioning system in accordance with some embodiments of the current invention. In some embodiments, semi-loop 306 serves as a physical limiter of overstretching of net 300. As shown in Fig. 4A, net tensioning control system 300 comprises a transverse band 302 semi-loop 306 locking portion 402 along one or more edge longitudinal bands (at the net's longitudinal edge) 106 at one or more edges 304 of net 300 that stops the stretching of transverse band 302 from tearing net 300.

In one embodiment, edges or edge is a longitudinal edge. In one embodiment, an edge or edges comprise a portion of longitudinal bands positioned at the edges or the longitudinal edges of the net. In one embodiment, a net comprises 2 longitudinal edges. In one embodiment, each longitudinal edge comprises at least one longitudinal band. In one embodiment, each longitudinal edge comprises 1 to 10 longitudinal bands. In one embodiment, each longitudinal edge comprises 1 to 6 longitudinal bands. In one embodiment, each longitudinal edge comprises 2 to 4 longitudinal bands. In some embodiments and as explained elsewhere herein, net 300 transverse band 302 is disposed along adherence points in channels 110 and/or dedicated channels 312. In some embodiments, adherence of transverse band 302 within one or more channels 110 and/or a dedicated channel 312 at edge portions of net 300, e.g., along an edge 304 band 106, is stronger than the adherence of transverse and longitudinal bands 104/102 of net 300 at non-edge 304 portions of net 300. This configuration forms a locking portion 402 along one or more edge portions of net 300, disposed between one or more channels 110 and/or a dedicated channel 312. In some embodiments, one or more portions of transverse band 104/302 are coated with an adhesive. In some embodiments, transverse band 104/302 is coated in its entirety with an adhesive. In some embodiments, one or more portions of transverse band 104/302 are welded and/or adhered to one or more longitudinal bands 106.

A potential advantage of this configuration is in that local variation in stretching of net 300 does not affect edges 304 of net 300 e.g., do not bring about tearing of edges 304. A potential advantage of a locking portion 402 is in that when net 300 is tensioned, locking portion 402 stops semi-loop 306 from moving from edges 304 inwards towards the center of net 300 in a direction indicated by arrow 395.

In some embodiments, the ratio between the area (a) of locking portion 402 and the area (b), marked by broken lines 404, which comprises area (a) and includes channels 110 and/or a dedicated channel 312 is (0.1b>a). The area (b) of net 300 is determined by the density of net 300 longitudinal and transverse bands and not necessarily by the stretchability of net 300.

In some embodiments, one or more portions 402 along edge 304 band 106 may be strengthened by an increase in the density of net 300 the transverse and longitudinal bands 104/102, an added layer of net 300, an added layer of polymer or similar or any other strengthening mechanism.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

In the description and claims of the application, each of the words "comprise" "include" and "have", and forms thereof, are not necessarily limited to members in a list with which the words may be associated.

The descriptions of the various embodiments of the present invention have been presented for purposes of illustration but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A net, comprising:
a plurality of transverse bands; intersecting
a plurality of longitudinal bands; wherein each longitudinal band (102) of said plurality of longitudinal bands comprises two intermittently adhered films (112) forming channels at discontinuities of adhesion between said films; and
wherein at an intersection (114) of a longitudinal band (102) and a transverse band (104) said transverse band (104) is threaded through a channel (110) in said longitudinal band (102), wherein the strength of the adhesion between said transverse band (104) and said films in said channel (110) is at least 30% weaker than said adhesion between said films, thereby a position and orientation of said transverse band (104) in relation to said longitudinal band (102) at said channel (110) is adjustable,
wherein said channel (110) is partially adhered to said transverse band (104) that is threaded therethrough.

2. The net according to claim 1, wherein at least two of a plurality of transverse bands are threaded through channels of at least two of a plurality of said longitudinal bands and forming four intersections between said longitudinal bands and said transverse bands.

3. The net according to any one of claims 1-2, wherein: (a) said channel (110) comprises inner surfaces (122) facing each other and wherein the transverse band (104) occupies 20% to 90% of a surface area of said inner surfaces (122); (b) the ratio between a surface area of adhered portions of said films to a surface area of said films at said channel (110) is at least 3:1;, or any combination of (a), and (b).

4. The net according to any one of claims 1-3, wherein a location of the point of intersection (114) between said longitudinal band (102) and said transverse band (104) is adjustable along the length of at least one of said longitudinal bands and/or said transverse bands, wherein adjustability of the net is independent of the elasticity of said transverse bands and said longitudinal bands.

5. The net according to any one of claims 1-4, wherein said transverse band (104) further crosses an edge longitudinal band (304) in a serpentine or zigzag manner.

6. A net, comprising:
a plurality of transverse bands; intersecting
a plurality of longitudinal bands;
wherein each longitudinal band (102) of said plurality of longitudinal bands comprises two intermittently adhered films (112) forming channels at discontinuities of adhesion between said films; and wherein at an intersection (114) of a longitudinal band (102) and a transverse band (104), said transverse band (104) is threaded through a channel (110) in said longitudinal band;
wherein said channel (110) is partially adhered to said transverse bands that is threaded therethrough ; and
wherein said adhesion between each film of said films within said channel (110) and said transverse band (104) is at least 30% weaker than the adhesion between the adhered films (112), thereby a position and orientation of said transverse band (104) in relation to said longitudinal band (102) at said channel (110) is adjustable.

7. The net according to claim 6, wherein at least two of a plurality of transverse bands are threaded through channels of at least two of a plurality of said longitudinal bands and forming four intersections between said longitudinal bands and said transverse bands.

8. The net according to any one of claims 6-7, wherein: (a) said channel (110) comprises inner surfaces (122) facing each other and wherein said transverse band (104) occupies 20% to 90% of a surface area of said inner surfaces (122); (b) the ratio between a surface area of adhered portions of said films to a surface area of said films at said channel (110) is at least 3:1; or a combination of (a) and (b).

9. The net according to any one of claims 6-8, wherein a location of the point of intersection (114) between said longitudinal band (102) and said transverse band (104) is adjustable along the length of at least one of said longitudinal bands and/or said transverse bands.

10. The net according to any one of claims 6-9, wherein said transverse band (104) further crosses an edge longitudinal band (304) in a serpentine or zigzag manner.

11. The net according to claim 10, wherein said transverse band (104) crosses said edge longitudinal band (304) of said net and forms a semi-loop at one net's longitudinal edge, another net's longitudinal edge, or both.

## Patentansprüche

1. Netz mit:
einer Mehrzahl von Querbändern, die eine Mehrzahl von Längsbändern schneiden, wobei jedes Längsband (102) der Mehrzahl von Längsbändern zwei intermittierend miteinander verbundene Folien (112) umfasst, die an Unterbrechungen einer Haftverbindung zwischen den Folien Kanäle bilden; und
wobei an einer Kreuzung (114) eines Längsbandes (102) und eines Querbandes (104) das Querband (104) durch einen Kanal (110) in dem Längsband (102) geführt ist, wobei die Festigkeit der Haftung zwischen dem Querband (104) und den Folien in dem Kanal (110) mindestens 30 % schwächer ist als die Haftung der Folien untereinander, wodurch eine Position und Ausrichtung des Querbandes (104) in Bezug auf das Längsband (102) an dem Kanal (110) einstellbar ist,
wobei der Kanal (110) teilweise an dem Querband (104) haftet, das durch ihn hindurchgeführt ist.

2. Netz nach Anspruch 1, bei dem mindestens zwei einer Mehrzahl von Querbändern durch Kanäle von mindestens zwei einer Mehrzahl der Längsbänder gefädelt sind und vier Schnittpunkte zwischen den Längsbändern und den Querbändern bilden.

3. Netz nach einem der Ansprüche 1-2, bei dem:
a) der Kanal (110) einander zugewandte Innenflächen (122) umfasst und bei dem das Querband (104) 20 % bis 90 % einer Fläche der Innenflächen (122) einnimmt; oder
(b) das Verhältnis zwischen einer Fläche der aneinander haftenden Teile der Folien und einer Fläche der Folien am Kanal (110) mindestens 3:1 beträgt; oder
eine Kombination aus (a) und (b).

4. Netz nach einem der Ansprüche 1-3, bei dem die Position des Schnittpunkts (114) zwischen dem Längsband (102) und dem Querband (104) entlang der Länge der Längsbänder und/oder der Querbänder einstellbar ist, wobei die Einstellbarkeit des Netzes unabhängig von der Elastizität des Querbänder und der Längsbänder ist.

5. Netz nach einem der Ansprüche 1 bis 4, bei dem das Querband (104) ferner ein Randlängsband (304) in Schlangenlinien oder im Zickzack kreuzt.

6. Netz mit:
einer Mehrzahl von Querbändern, die eine Mehrzahl von Längsbändern schneiden,
wobei jedes Längsband (102) der Mehrzahl der Längsbänder zwei intermittierend miteinander verbundene Folien (112) umfasst, die an den Unterbrechungen der Verbindung zwischen den Folien Kanäle bilden; und wobei an einer Kreuzung (114) eines Längsbands (102) und eines Querbands (104) das Querband (104) durch einen Kanal (110) in dem Längsband geführt ist;
wobei der Kanal (110) teilweise an den Querbändern haftet, die durch ihn geführt sind; und
wobei die Haftung zwischen jeder Folie der Folien innerhalb des Kanals (110) und dem Querband (104) mindestens 30 % schwächer ist als die Haftung der haftenden Folien (112) untereinander, wodurch eine Position und Ausrichtung des Querbands (104) in Bezug auf das Längsband (102) an dem Kanal (110) einstellbar ist.

7. Netz nach Anspruch 6, bei dem mindestens zwei einer Mehrzahl von Querbändern durch Kanäle von mindestens zwei einer Mehrzahl der Längsbänder geführt sind und vier Schnittpunkte zwischen den Längsbändern und den Querbändern bilden.

8. Netz nach einem der Ansprüche 6-7, bei dem:
(a) der Kanal (110) einander zugewandte Innenflächen (122) umfasst, und bei dem das Querband (104) 20 % bis 90 % einer Fläche der Innenflächen (122) einnimmt; oder
(b) das Verhältnis zwischen einer Fläche der aneinander haftenden Teile der Folien und einer Fläche der Folien am Kanal (110) mindestens 3:1 beträgt; oder
eine Kombination aus (a) und (b).

9. Netz nach einem der Ansprüche 6 bis 8, bei dem eine Position des Schnittpunkts (114) zwischen dem Längsband (102) und dem Querband (104) entlang der Länge der Längsbänder und/oder Querbänder einstellbar ist.

10. Netz nach einem der Ansprüche 6 bis 9, bei dem das Querband (104) ferner ein Randlängsband (304) in Schlangenlinien oder im Zickzack kreuzt.

11. Netz nach Anspruch 10, bei dem das Querband (104) das Randlängsband (304) des Netzes kreuzt und eine Halbschlaufe an einer Längskante des Netzes, einer Längskante eines anderen Netzes oder an beiden bildet.

## Revendications

1. Filet, comportant :
une pluralité de bandes transversales, croisant
une pluralité de bandes longitudinales, dans lequel chaque bande longitudinale (102) de ladite pluralité de bandes longitudinales comporte deux films (112) adhérents par intermittence formant des canaux au niveau de discontinuités d'adhérence entre lesdits films ; et
dans lequel à une intersection (114) d'une bande longitudinale (102) et d'une bande transversale (104) ladite bande transversale (104) est enfilée à travers un canal (110) dans ladite bande longitudinale (102), dans lequel la résistance de l'adhérence entre ladite bande transversale (104) et lesdits films dans ledit canal (110) est au moins 30 % plus faible que ladite adhérence entre lesdits films, ainsi une position et orientation de ladite bande transversale (104) par rapport à ladite bande longitudinale (102) au niveau dudit canal (110) est réglable,
dans lequel ledit canal (110) adhère partiellement à ladite bande transversale (104) qui est enfilée à travers celui-ci.

2. Filet selon la revendication 1, dans lequel au moins deux parmi une pluralité de bandes transversales sont enfilées à travers des canaux d'au moins deux parmi une pluralité desdites bandes longitudinales et forment quatre intersections entre lesdites bandes longitudinales et lesdites bandes transversales.

3. Filet selon l'une quelconque des revendications 1 et 2, dans lequel : (a) ledit canal (110) comporte des surfaces intérieures (122) se faisant face et dans lequel la bande transversale (104) occupe 20 % à 90 % d'une superficie desdites surfaces intérieures (122) ; (b) le rapport entre une superficie de portions adhérentes desdits films et une superficie desdits films au niveau dudit canal (110) est d'au moins 3:1 ; ou toute combinaison de (a) et (b).

4. Filet selon l'une quelconque des revendications 1 à 3, dans lequel un emplacement du point d'intersection (114) entre ladite bande longitudinale (102) et ladite bande transversale (104) est réglable sur la longueur d'au moins l'une desdites bandes longitudinales et/ou desdites bandes transversales, dans lequel la capacité de réglage du filet est indépendante de l'élasticité desdites bandes transversales et desdites bandes longitudinales.

5. Filet selon l'une quelconque des revendications 1-4, dans lequel ladite bande transversale (104) croise en outre une bande longitudinale de bord (304) de manière sinueuse ou en zigzag.

6. Filet, comportant :
une pluralité de bandes transversales, croisant
une pluralité de bandes longitudinales ;
dans lequel chaque bande longitudinale (102) de ladite pluralité de bandes longitudinales comporte deux films (112) adhérents par intermittence formant des canaux au niveau de discontinuités d'adhérence entre lesdits films ; et dans lequel à une intersection (114) d'une bande longitudinale (102) et d'une bande transversale (104), ladite bande transversale (104) est enfilée à travers un canal (110) dans ladite bande longitudinale ;
dans lequel ledit canal (110) adhère partiellement à ladite bandes transversales qui est enfilée à travers celui-ci ; et
dans lequel ladite adhérence entre chaque film desdits films à l'intérieur dudit canal (110) et ladite bande transversale (104) est au moins 30 % plus faible que l'adhérence entre les films (112) adhérents, ainsi une position et orientation de ladite bande transversale (104) par rapport à ladite bande longitudinale (102) au niveau dudit canal (110) est réglable.

7. Filet selon la revendication 6, dans lequel au moins deux parmi une pluralité de bandes transversales sont enfilées à travers des canaux d'au moins deux parmi une pluralité desdites bandes longitudinales et forment quatre intersections entre lesdites bandes longitudinales et lesdites bandes transversales.

8. Filet selon l'une quelconque des revendications 6 et 7, dans lequel : (a) ledit canal (110) comporte des surfaces intérieures (122) se faisant face et dans lequel ladite bande transversale (104) occupe 20 % à 90 % d'une superficie desdites surfaces intérieures (122) ; (b) le rapport entre une superficie de portions adhérentes desdits films et une superficie desdits films au niveau dudit canal (110) est d'au moins 3:1 ; ou une combinaison de (a) et (b).

9. Filet selon l'une quelconque des revendications 6 à 8, dans lequel un emplacement du point d'intersection (114) entre ladite bande longitudinale (102) et ladite bande transversale (104) est réglable sur la longueur d'au moins l'une desdites bandes longitudinales et/ou desdites bandes transversales.

10. Filet selon l'une quelconque des revendications 6-9, dans lequel ladite bande transversale (104) croise en outre une bande longitudinale de bord (304) de manière sinueuse ou en zigzag.

11. Filet selon la revendication 10, dans lequel ladite bande transversale (104) croise ladite bande longitudinale de bord (304) dudit filet et forme une demi-boucle au niveau du bord longitudinal d'un filet, du bord longitudinal d'un autre filet, ou des deux.
